# EUROPEAN PATENT SPECIFICATION

(11) **EP 1 500 226 B1**
(45) Date of publication and mention of the grant of the patent: **13.06.2007**
(21) Application number: 03727338.0
(22) Date of filing: 17.04.2003
(51) Int. Cl.: H04L 9/32, H04L 29/06, H04L 9/08

(54) **SYSTEM AND METHOD FOR STORAGE AND RETRIEVAL OF A CRYPTOGRAPHIC SECRET FROM A PLURALITY OF NETWORK ENABLED CLIENTS**
SYSTEM UND METHODE ZUM SPEICHERN SOWIE ABRUFEN KRYPTOGRAPHISCHER GEHEIMNISSE VON UNTERSCHIEDLICHEN KUNDENENDGERÄTEN IN EINEM NETZWERK
SYSTEME ET PROCEDE DE STOCKAGE ET RECUPERATION D'UN SECRET CRYPTOGRAPHIQUE PARMI UN ENSEMBLE CLIENTS AGREES D'UN RESEAU

(30) Priority: 30.04.2002 US 134644
(43) Date of publication of application: 26.01.2005
(73) Proprietor: ACTIVCARD IRELAND LIMITED, Dublin 2 (IE)
(72) Inventor: AUDEBERT, Yves, Los Gatos, CA 95032 (US); WEN, Wu, Sunnyvale, CA 94087 (US)
(74) Representative: Colas, Jean-Pierre
(86) International application number: PCT/EP2003/004181
(87) International publication number: WO 2003/094423

(56) References cited:
- WO-A-99/33219
- US-A- 5 937 068
- US-B1- 6 173 400
- US-B1- 6 263 446
- FORD W ET AL: "Server-assisted generation of a strong secret from a password" ENABLING TECHNOLOGIES: INFRASTRUCTURE FOR COLLABORATIVE ENTERPRISES, 2000. (WET ICE 2000). PROEEDINGS. IEEE 9TH INTERNATIONAL WORKSHOPS ON GAITHERSBURG, MD, USA 14-16 JUNE 2000, LOS ALAMITOS, CA, USA,IEEE COMPUT. SOC, US, 14 June 2000 (2000-06-14), pages 176-180, XP010522931 ISBN: 0-7695-0798-0 cited in the application

## Description

### Field of Invention

The present invention relates to a data processing system and method for retrieving a cryptographic secret stored on a server from various network enabled client locations. The cryptographic secret includes a user's private key and biometric template data.

### Background of Invention

The public key infrastructure (PKI) allows the use of a private key for purposes of signing documents, providing non-repudiation of the signer, authentication using digital certificates, decrypting messages encrypted using the associated public key, etc. These unique features make PKI a significant contributor to electronic commerce and other commercial enterprises. The private key component is generally associated with either an individual or other specific entity, which necessitates that the private key be maintained in as secure an environment as reasonably achievable.

More recently, biometric data is increasingly being used for authentication and other purposes. In order to allow use of the biometric data at multiple locations, standards have been devised that describe the essential parameters necessary to be obtained from the user and stored. These parameters form a template that are specific to the user and once generated, must be maintained in a secure manner analogous to that of a user's private key.

There are a number of mechanisms available in the current art for maintaining and using public infrastructure keys and cryptographic templates such as storing the cryptographic secrets inside a security token such as a smart card. This methodology provides excellent protection of the private key but requires the necessary hardware and software to be installed on a client computer in order to take advantage of the smart card. While slowly gaining acceptance in the United States, smart card readers are not widely available. Thus, a user having his or her private key or biometric parameters installed inside a smart card would not be able to use their private key away from their primary work location.

Another mechanism known in the art is disclosed in US patents 6,292,895 and 6,154,543 to Baltzley where a subscription services provides the user with the ability to sign into a secure email environment. This mechanism has several advantages including the ability to send encrypted messages to other subscribers, provides true non-repudiation by encrypting the private key with a user's passphrase, which is stored on a secure server. The subscription service operator does not know the passphrase and therefore cannot access the subscriber's private key. The nature of the subscription service allows access to the secure messaging features from almost any client connected to the Internet. Likewise, there are several disadvantages to this mechanism including the creation of another set of credentials for a user which are not recognized outside of the subscription service, the cost of enrolling and maintaining the subscription service, the requirement that all participants be subscribers of the service and the lack of ability to incorporate a strong two factor authentication process before retrieving the encrypted user's private key.

A related mechanism that does not require a subscription service is disclosed in US Patent 6,233,341 to Riggins where temporary credentials are generated for a user. This mechanism provides a roaming user the ability to sign messages and maintain non-repudiation status but does not provide the user with the ability to decrypt or sign messages with his or her primary PKI keys and is therefore of only limited use.

Another roaming credential mechanism is disclosed in US patent 6,263,446 to Kausik, et al., where one or more passphrases are used to download the user's credentials to the client. In this invention, both the user and the server maintaining the credentials share the secrets controlling access to the user's credentials. While simple to implement, this mechanism cannot provide true non-repudiation since the secrets are available to the operators of the server maintaining the user's credentials. Secondly, this mechanism if implemented without additional security precautions could be vulnerable to a replay type attack as there are no dynamic variables introduced into the access methodology.

A third approach is disclosed in US patent 6,317,829 to Van Oorschot where a public repository of current and expired PKI keys associated with a user, allows a user to decrypt and review old and current messages, even when the user is away from his or her primary work location. The ability to review messages encrypted using currently expired PKI keys from a remote terminal location can provide significant time savings and other benefits. However, the disclosed security mechanisms to protect the contents of the user's public repository rely essentially on the same shared secret arrangements disclosed in the patent Kausik, et al. and are subject to the same disadvantages described above.

Other sophisticated approaches to solving the roaming user problem have been addressed by RSA Security, Inc. and Verisign, Inc. RSA's approach is described in a white paper entitled *"RSA Keon*^{™} *Web Passport, Technical Overview,"* 2001. In their white paper, RSA describes one solution to providing a roaming user's credentials using a web browser and proprietary applets to contain what RSA describes as a "virtual card." The "virtual card" approach is a very secure implementation, which includes the ability to utilize two factor authentication techniques.

One apparent limitation of the RSA approach is that all of the cryptographic information necessary to access the user's "virtual card," and thus his or her private key, resides at one point in time on a single server making the system somewhat vulnerable to a concerted insider attack. As such, true non-repudiation is arguably unavailable with RSA's approach.

Verisign, Inc. provides another approach which is described in a joint presentation with RSA Security, Inc. to the IEEE *"Proceedings of the Fifth International Workshop on Enterprise Security,"* entitled *"Server Assisted Generation of a Strong Secret from a Password."* In Verisign's implementation, a user's password is "hardened" as a function of the number of "hardening" sessions and number of successful authentications. This mechanism supports full non-repudiation as the user's private key is not available to the service provider in unencrypted form, nor is the necessary cryptographic information available to decipher the encrypted private key. Verisign's approach relies on a user remembering and entering a password to gain access to the cryptogram containing his or her private key. This approach is reasonably sound, but does not lend itself well to incorporation of two-factor authentication as the user remembered password is necessarily static.

It would thus be advantageous to provide a mechanism, which allows secure retrieval and use of a user's private key, biometric data or both that facilitates true non-repudiation and incorporates two-factor authentications before allowing the retrieval of the user's private key, biometric data or both.

### Summary of Invention

This invention provides a system and method that allows a user to securely access, retrieve and use a cryptographic secret from any network-enabled client. To practice this invention, the user first authenticates to a server using a security token and a unique identifier associated with the user. The unique identifier is typically the username portion of the username/password login protocol and the password being a dynamic password generated by the security token utilizing the synchronous authentication methodology described in US Patent 5,937,068, "System and method for user authentication employing dynamic encryption variables".

Following authentication, an enrollment process is performed which generates a symmetric key encryption key (KEK) in transient memory. The KEK is generated by combining a token password previously stored inside the security token with a server secret generated on a server using a binary operation. The token password and server secret are obfuscated using a series of binary operations to prevent clear text disclosure. The KEK is then used to encrypt the cryptographic secret intended to be stored on the server using a block cipher method. Once encrypted, the KEK is destroyed and the resulting cryptogram is sent to the server for storage and future retrieval. The cryptogram and server secret are associated with the user's unique identifier when stored on the server to allow for future retrieval.

To retrieve the user's secret from another client, the user again authenticates to the server using his or her unique identifier and security token. Once authenticated, the user accesses a network service, which requires entry of the token password. The server retrieves the stored server secret and cryptogram via the user's unique identifier, which is then sent to the calling client. The token password is then combined with the server secret regenerating the KEK in transient memory. The KEK is then used to decrypt the encrypted secret using the identical block cipher methodology used to encrypt the secret. The resulting secret is then stored in transient memory for use.

Both the enrollment and retrieval processes utilize one or more downloadable applications to generate the KEK. The server verifies that the client has the required applets before proceeding. If necessary, the required applets are downloaded and operatively installed on the calling client.

In the preferred embodiment of the invention, the downloadable applications are envisioned as browser applets, however any equivalent mechanism for downloading and operatively installing applications will work as well. The term applet as used herein refers to an application that can be downloaded over a network and executed on a client computer and is not necessarily restricted to a net browser.

### Brief Description of Drawings

FIG. 1 - is a generalized block diagram illustrating the invention.
FIG. 2 - is a detailed block diagram illustrating the first portion of the secret enrollment process where a data blob is generated between a security token and a client and sent over a network from the client to a server.
FIG. 3 - is a detailed block diagram illustrating the second portion of the secret enrollment process where a server component is added to the data blob and returned over the network to the client.
FIG. 4 - is a detailed block diagram illustrating the third portion of the secret enrollment process where a key encryption key is generated and used to encrypt the secret for storage on the server.
FIG. 5 - is a detailed block diagram illustrating applet transfer from the server to a second client.
FIG. 6 - is a detailed block diagram illustrating the first portion of the secret retrieval process where a data blob is generated between the security token and the client and sent over the network to the server.
FIG. 7 is a detailed block diagram illustrating the second portion of the secret retrieval process where the server component is added to the data blob and returned over the network to the second client.
FIG. 8 - is a detailed block diagram illustrating the third portion of the secret retrieval process where a key encryption key is generated and used to decrypt the secret retrieved from storage by the server.
FIG. 9 - is a flowchart illustrating the steps for the secret enrollment process.
FIG. 10 - is a flowchart illustrating the steps for retrieval and storage of the secret on the second client.

### Detailed Description of Preferred Embodiment

This invention provides a system and method that allows a user to securely store, retrieve and use a cryptographic secret such as biometric template, private key, or both from any network enabled client.

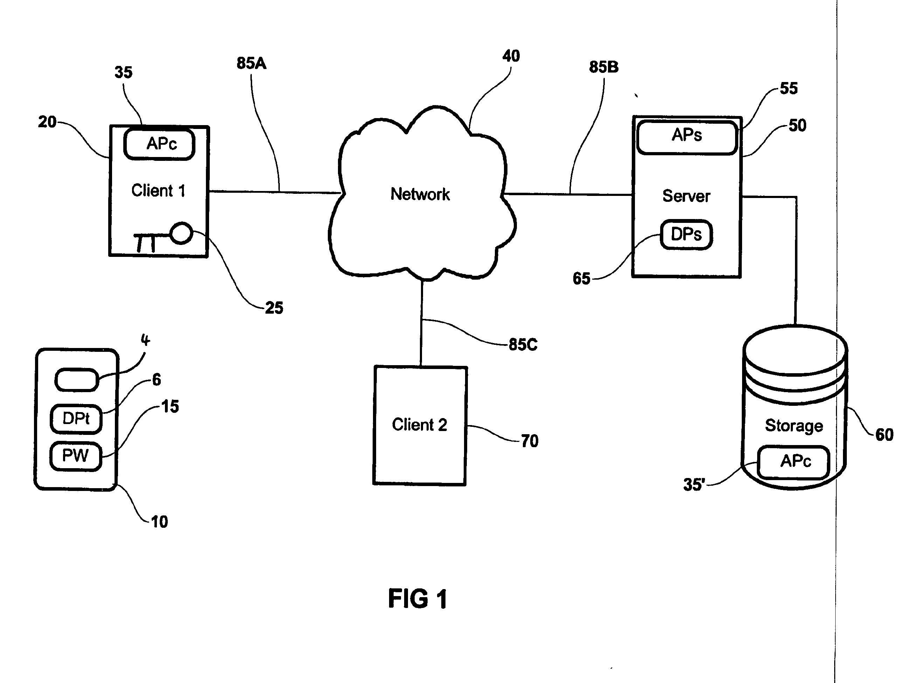

Referring to FIG.1, a general system block diagram is presented comprising a first network enabled client 20. The first client computer includes a web browser such as Microsoft's Internet Explorer^{™} or Netscape Navigator^{™} or equivalent, which allows the storage and use of a cryptographic secret 25. The cryptographic secret 25 can be a private component of a public key infrastructure (PKI) key set including an RSA private key, Diffie-Hellman private key, Pretty Good Privacy (PGP) private key, El Gamal private key, etc., a biometric template or both.

A client applet APc 35 is operatively installed on the first client. The client applet APc 35 includes the capabilities of generating random numbers, performing exclusive OR (XOR) operations, generating symmetric keys using a password supplied from a security token and secret supplied by a server, performing symmetric cryptographic operations using the generated symmetric keys and storing the results of cryptographic operations and generated random numbers in transient memory. The client applet APc 35 may be locally installed or downloaded and operatively installed from a server 50.

The first client 20 is connected 85A to a network 40 and in processing communications 85B with the server 50. The server 50 includes a user interface such as a keyboard and display, a server applet APs 55 which is compatible with the client applet APc 35. A functionally connected online data storage device 60, such as a hard disk drive, includes a duplicate copy of the client applet APc 35'. The duplicate copy of the client applet APc 35' is downloaded to clients lacking the applet or having an out of date applet.

The server applet APs 55 is operatively installed on the server and has the equivalent functionalities described for the client applet APc 35. In addition, the server applet APs 55 includes the capabilities of temporarily storing the most recently generated synchronous password DPs 65 as described in US Patent 5,937,068, storing and retrieving a cryptogram and server secret using a unique identifier such as a user name, or token serial number, from the storage device 60, determining if a calling client requires a client applet APc 35' and downloading a client applet APc 35' to the calling client if necessary.

A second network-enabled client 70 is connected 85C to the network 40 and in processing communications with the server 50. The second client 70 includes a user interface such as a keyboard and display and is intended to represent a plurality of other clients which lack both the client applet APc 35 and the user's secret 25 shown installed in the first network enabled client 20.

A portable hardware-based security token 10 such as an ActivCard One^{™} token offered by ActivCard, Inc., includes the capabilities of generating and storing a random number forming the token password 15, which is stored in non-volatile programmable memory (EEPROM) and only available to the token, allowing user interaction and display of computational results via a user interface including a keypad and display, authenticating a user based on a previously stored personal identification number (PIN), generating synchronous passwords, temporarily storing the most recently generated synchronous password 6 in volatile memory and performing exclusive OR (XOR) bitwise operations using the token password and most recent synchronous password as operands. This step obfuscates the actual token password from being disclosed in clear text.

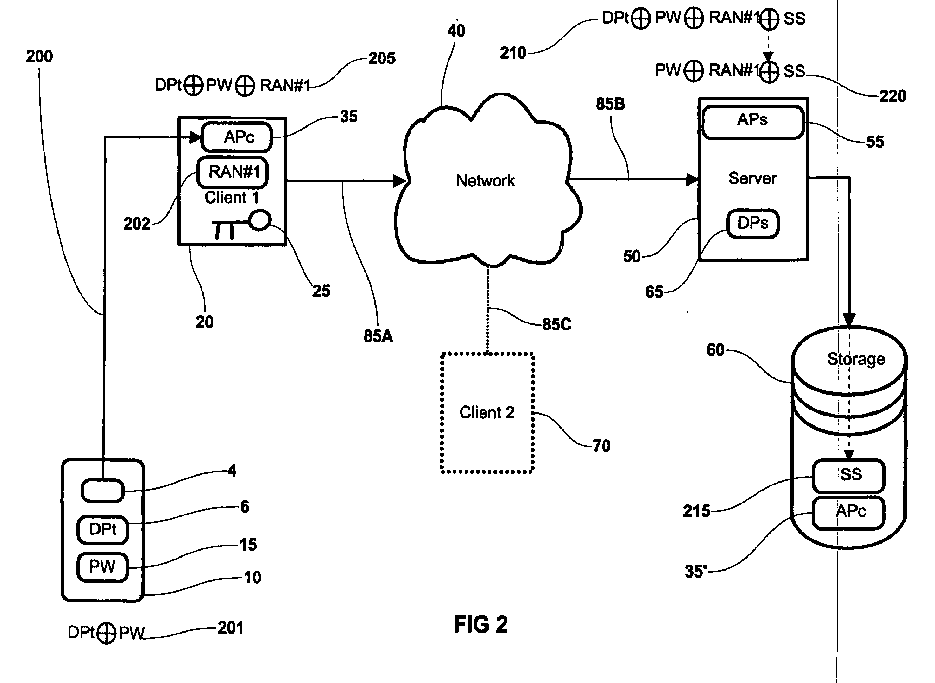

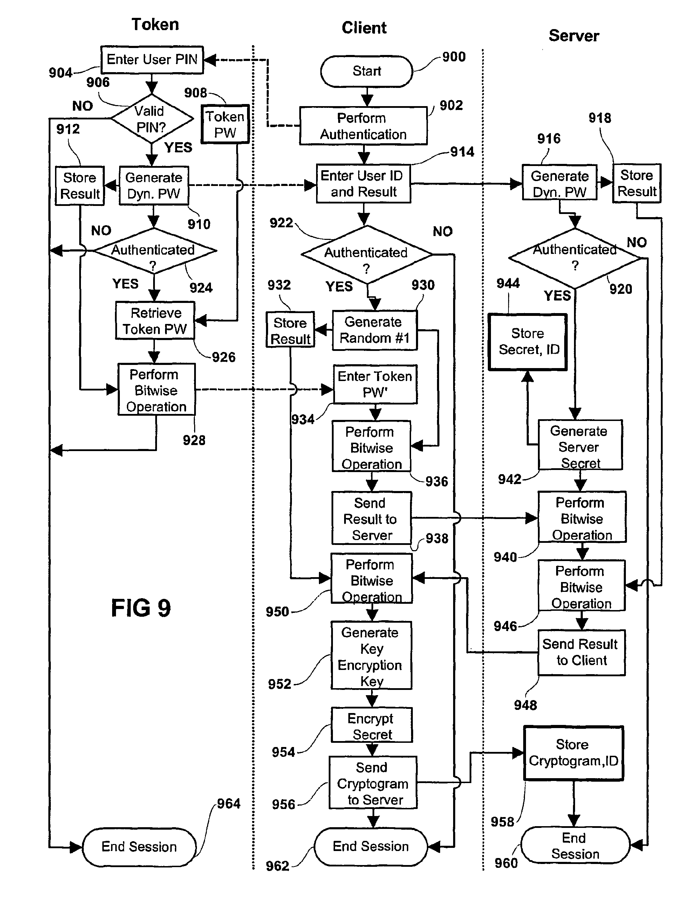

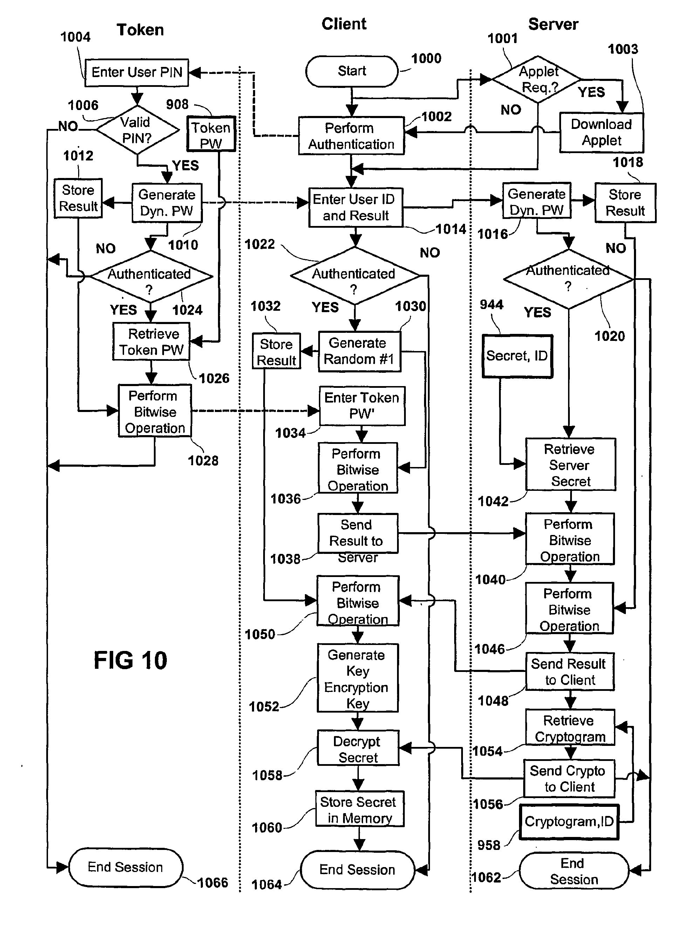

Referring to FIG. 2, the initial secret enrollment process is shown. For simplicity, FIG. 2 depicts the state of the invention following a successful two-factor authentication transaction between the user, and the security token 10 and the client 20 and the server 50. The security token requires entry of a user personal identification number (PIN) before gaining access to the token password 15. The two-factor authentication process is described in more detail in the discussion that follows below for Figures 9 and 10.

The enrollment process is initiated by the user accessing a function on the security token 10, which causes the previously stored token password 15 to be combined with the most recent synchronous password DPt 6 using a bitwise operator (XOR). The entire synchronous password is used in the bitwise operation except the least significant bits comprising the last two digits. These digits are used to synchronize the security token 10 to the server 50 as is described in US Patent 5,887,065, "System and method for user authentication having clock synchronization".

The result of the bitwise operation is displayed on the token display 4 and transferred 200 to the client 20. The client applet APc 35 generates a first random number 202 having a defined bit length equal to the synchronous password less the synchronization bits. The first random number is combined with the obfuscated password 201 using a bitwise operator (XOR) forming a first data blob 205. The original random number 202 is retained in transient memory by the client applet APc 35 until the conclusion of the secret enrollment session.

The first data blob 205 is sent 85A, 85B from the client 20 over the network 40 to the server 50. The server applet APs 55 generates a second random number called a server secret SS 215, a copy of which is stored on the storage device 60 and retrievable using the user's unique identifier (username or token identifier.) The server secret 215 is of equal bit length to the first random number 202 generated by the client applet APc 35. The server secret is combined using the bitwise operator (XOR) with the first data blob 205 by the server applet APs 55 forming a second data blob 210.

The second data blob 210 is then combined using the bitwise operator (XOR) with the most recent server synchronous password DPs 65 by the server applet APs 55, forming a third data blob 220. This third XOR operation effectively removes the token's dynamic password DPt 6 from the second data blob 210 since the token's dynamic password DPt 6 is equal to the server dynamic password DPs 65.

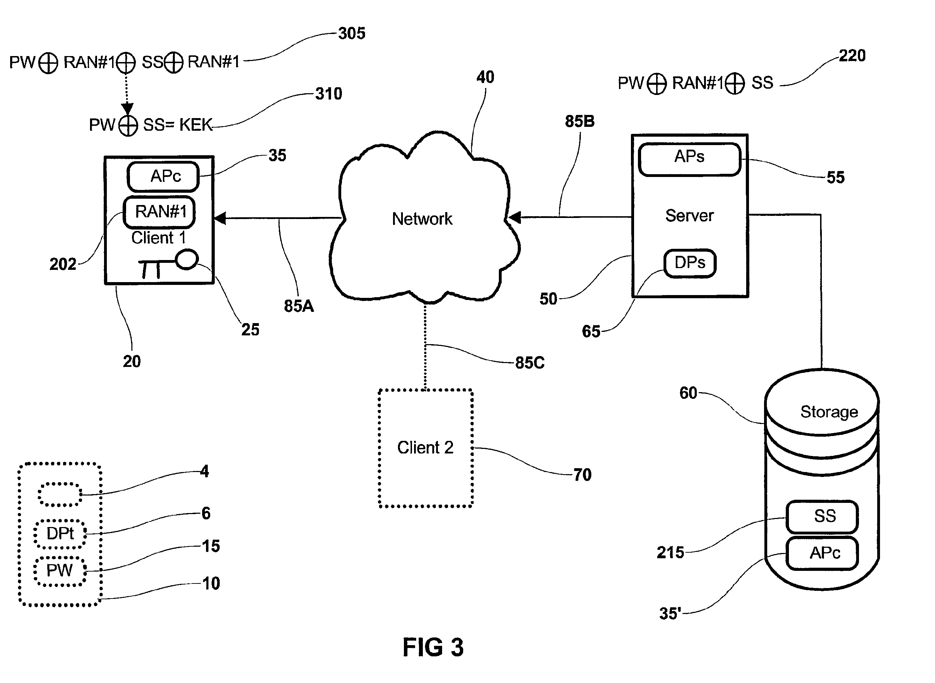

In FIG.3, the third data blob 220 is returned to the client applet APc 35 and combined 305 using a bitwise operator (XOR) with the first random number 202. This XOR operation effectively removes the first random number 202 from the third data blob and forms a symmetric key encryption key (KEK) 310 composed of the token password 15 and server secret 215. The KEK 310 is maintained in transient memory controlled by the client applet APc 35.

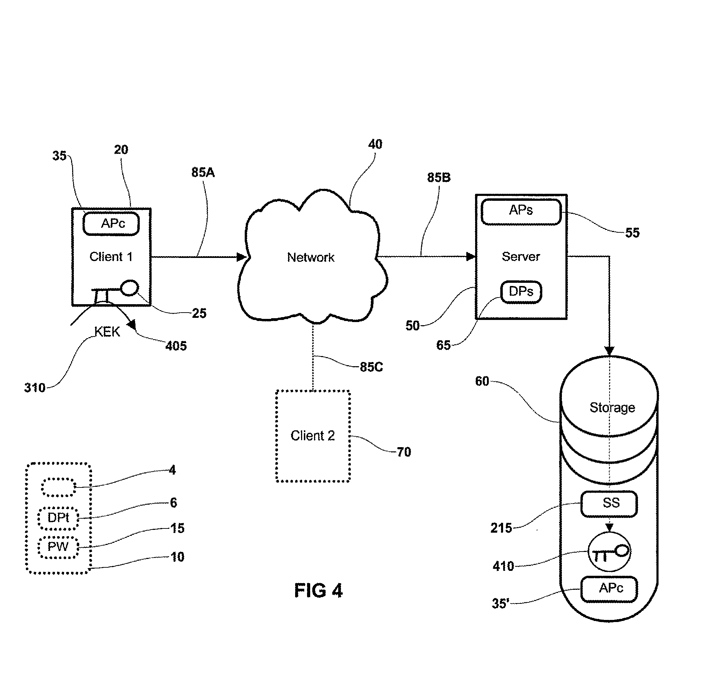

In FIG. 4, the KEK 310 is used to encrypt 405 the secret 25 using a symmetric block cipher such as DES, 3DES, AES or equivalent forming a cryptogram 410. The cryptogram 410 is then sent 85A, 85B from the client over the network 40 to the server 50 for storage on the storage device 60 and future retrieval via the user's unique identifier.

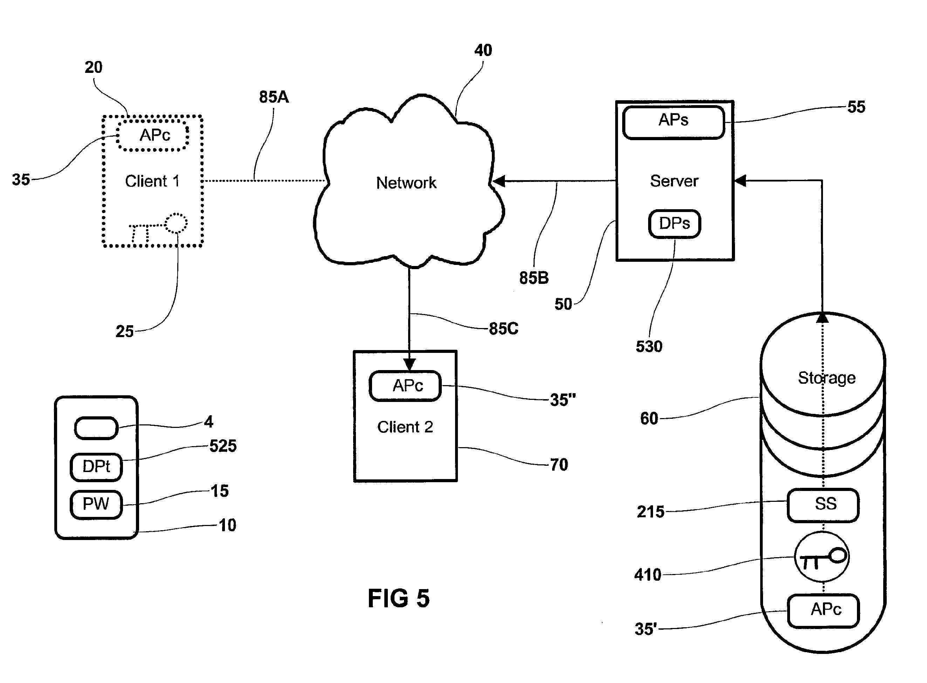

Referring to FIG. 5, the user is at a different location where a network-enabled client 70 is available and in processing communications 85C over the network 40 with the server 50. The client 70 lacks the necessary client applet 35' to retrieve his or her secret from the server. The server applet APs 55 retrieves a copy of the client applet APc 35' from storage 60 and sends the client applet 35' to the client 70 where it is operatively installed 35". The applet verification and download process may occur before or after authentication.

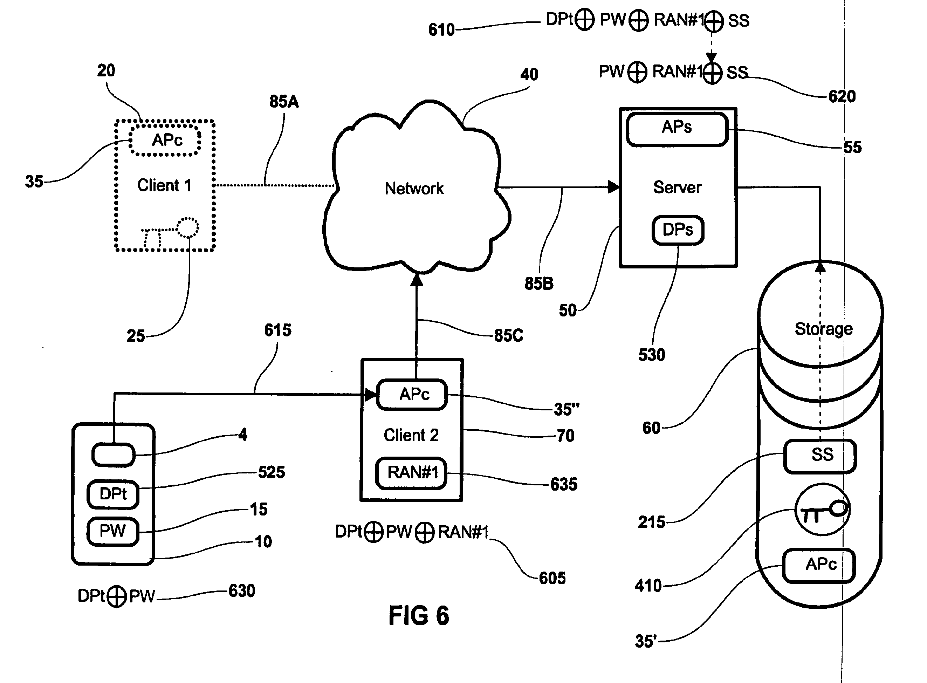

Referring to FIG. 6, to retrieve the user's secret contained in the cryptogram 410, the user must first authenticate to the server 50 using his or her unique identifier (username or token ID) and a new synchronous password DPt 525 generated using the security token 10. A new synchronous password DPs 530 is likewise generated on the server 50. Either before or after user authentication, the server performs an interrogation of the client to determine if a current version of the client applet exists.

The user accesses the token password function on the security token 10, which causes the previously stored token password 15 to be combined 630 with the most recent synchronous password DPt 525 using the bitwise operator (XOR). The result of this bitwise operation is displayed on the token display 4 and transferred 615 to the client 70. The client applet APc 35" generates a new random number 635, which is combined with the obfuscated password 201 using a bitwise operator (XOR) again forming a first data blob 605. The new random number 635 is retained in transient memory by the client applet APc 35" until the conclusion of the secret retrieval session.

The first data blob 605 is sent 85C from the client 20 over the network 40 to 85B the server 50. The server applet APs 55 retrieves the server secret SS 215, which is combined using the bitwise operator (XOR) with the first data blob 605 by the server applet APs 55 forming a second data blob 610. The second data blob 610 is then combined using the bitwise operator (XOR) with the most recent server synchronous password DPs 530 by the server applet APs 55, forming the third data blob 620.

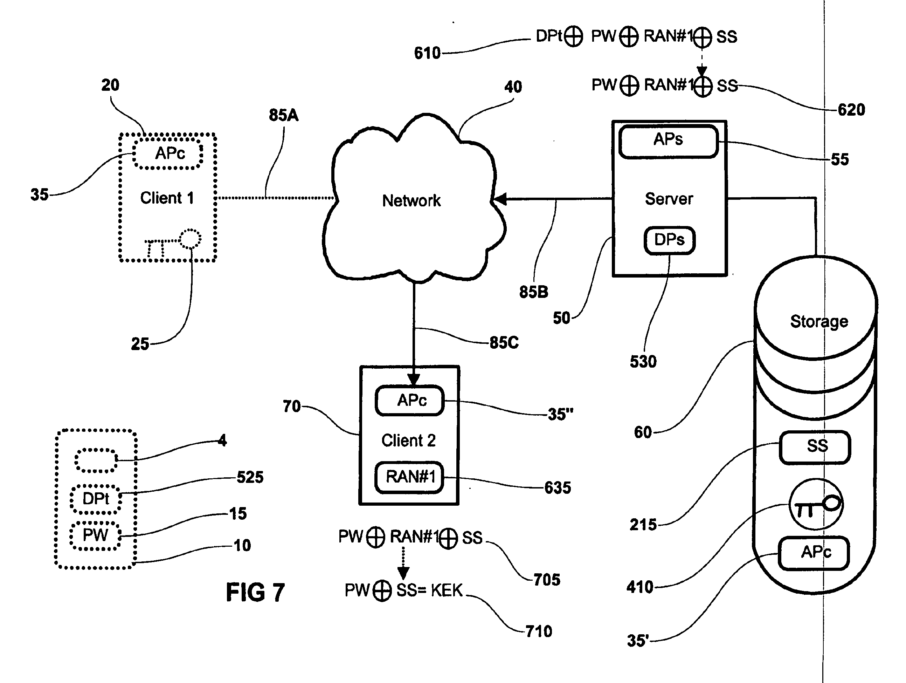

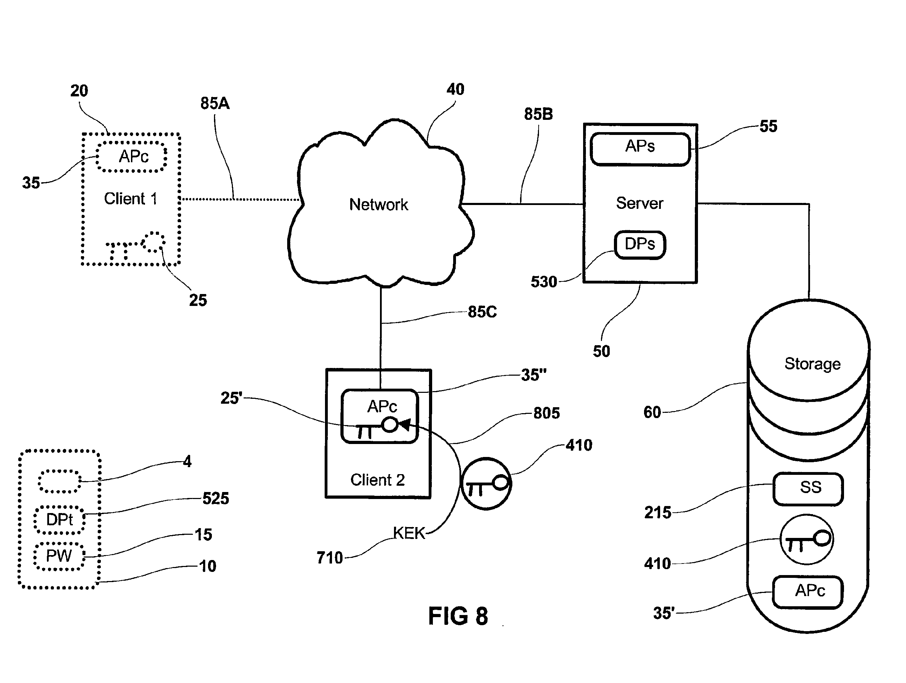

Referring to FIG.7, the third data blob is returned to the calling client 70 and combined with the new random number 635 using the bitwise operator (XOR) regenerating the KEK 710. In FIG. 8, the cryptogram 410 containing the secret is sent to the client 70 and decrypted 805 using the regenerated KEK 710. The resulting secret 25' is then operatively installed in transient memory and available for use until the user ends his or her session.

Referring to FIG.9, a flowchart illustrating the secret enrollment process is provided. Dashed arrow lines are used to illustrate user interacts. Boxes shown in bold are used to identify storage of data necessary for the secret retrieval process shown in FIG. 10.

The process is initiated 900 by the user from the client containing his or her secret. In order to enroll the user's secret on the server, it is necessary that the user be authenticated 902. A two-factor authentication process is utilized in the preferred embodiment of the invention. To gain access to the security token, the user must know the personal identification number (PIN) necessary to access the token's functions. The user enters his or her PIN 904, which is compared 906 internally by the security token with the stored correct value. If an invalid entry has occurred (generally after a preset number of attempts) the security token prevents access and the session ends 964.

If the user enters the proper PIN 906, the user is permitted to access the security token functions and generates a first dynamic password 910, which is displayed on the token's LCD display and temporarily stored internally 912. The user enters the dynamic password and unique identifier into a login screen 914. This information is sent to the server, which causes the server to generate a dynamic password 916. A copy of the server generated dynamic password is temporarily stored 918. The server dynamic password is compared 920 to the token generated dynamic password. A match authenticates the user to the server and allows further processing, otherwise the sessions end 960, 962, 964.

If authenticated 924, the user selects the token password function and retrieves 926 the stored token password 908. The stored token password is combined 928 with the most recent dynamic password 912 using a bitwise operation (XOR). The result of the bitwise operation is entered into the client 934 and combined 936 using a second binary operation (XOR) with a random number 930 generated on the client. A copy of the random number is temporarily stored on the client 932.

The result of the second bitwise operation is sent to the server 938. The server generates another random number called a server secret 942 which is combined with the received result using a third bitwise operation 940. A copy of the server secret is stored on the server 944 and will be used in the secret retrieval process using the user's unique identifier as a cross-reference. The result of the third bitwise operation is combined with the most recently generated server dynamic password 946 using a forth bitwise operation and the result returned to the client 948.The result of the forth bitwise operation is combined with the client generated random number 932 using a fifth bitwise operation 950 generating a symmetric key encryption key 952. The key encryption key is then used to encrypt the secret 954 using a block cipher such as DES, 3DES or AES.

The resulting cryptogram is then sent to the server 956 where it is stored 958 with a cross reference to the user's unique identifier for future retrieval. This ends the enrollment process sessions 960, 962, 964.

In FIG. 10, a flowchart illustrating the secret retrieval process is described. The process is initiated 1000 when a user logs into the server from a network enabled client not containing his or her secret. The server determines if the client browser has a valid version of virtual token applet 1001. If not, the applet is downloaded 1003 and operatively installed on the client. Before proceeding further, the server requires the user to be authenticated 1002.

In order to generate a synchronous password, a two factor authentication process is performed which requires the user to enter his or her PIN into the security token 1004, which is compared internally by the security token with the stored correct value 1006. If an invalid entry has occurred (generally after a preset number of attempts) the security token prevents access and the session ends 1066.

If the user enters the proper PIN 1006, the user is permitted to access the security token functions and selects the synchronous password function, which generates the synchronous password 1010. A copy of the newly generated dynamic password is temporarily stored inside the security token 1012. The authentication code is entered by the user into the client along with his or her user ID and sent to the server for authentication 1014. The server generates a synchronous password 1016, which is compared with the token synchronous password 1020. If a match is found, the user is authenticated to the server and processing continues. A copy of the server generated synchronous password is temporarily stored on the server 1018.

If any part of the authentication process fails 1020, 1022, 1024, the token, client and server sessions end 1062, 1064, 1066. If successful, the user selects the token password function, which retrieves 1026 the stored token password 908. The stored token password is combined with the most recent dynamic password 1012 using a first bitwise operation (XOR) 1028. The result of the first bitwise operation is entered into the client 1034 and combined using a second binary operation (XOR) 1036 with a random number 1030 generated on the client. A copy of the random number is temporarily stored on the client 1032.

The result of the second bitwise operation is sent to the server 1038. The server retrieves 1042 the previously stored server secret 944, which is combined with the received result using a third bitwise operation (XOR) 1040. The result of the third bitwise operation is combined with the most recently generated server dynamic password 1018 using a fourth bitwise operation (XOR) 1046 and the result returned to the client 1048. The result of the forth bitwise operation is combined with the client generated random number 1032 using a fifth bitwise operation (XOR) 1050 generating a symmetric key encryption key 1052.

The cryptogram 958 is retrieved from storage by the server 1054 and sent to the client 1056, decrypted using the Key Encryption Key 1058 and the same symmetric block cipher methodology used to encrypt the secret. The resulting secret is then operatively stored in transient client memory 1060 and the secret retrieval process is ended 1062, 1064, 1066.

The foregoing described embodiments of the invention are provided as illustrations and descriptions. They are not intended to limit the invention to precise form described. In particular, it is contemplated that functional implementation of the invention described herein may be implemented equivalently in hardware, software, firmware, and/or other available functional components or building blocks. Other variations and embodiments are possible in light of above teachings, and it is not intended that this Detailed Description limit the scope of invention, but rather the Claims following herein.

## Claims

1. A cryptographic system for facilitating remote storage and retrieval of a cryptographic secret (25) which can be encrypted via a server (50) from one or more network enabled clients comprising:
a first network enabled client (20) including an operable application downloadable (35), said cryptographic secret (25); means especially adapted to encrypt said cryptographic secret (25) using a first symmetric key (310) derived from a token password (15), a server secret (215) and a symmetric algorithm; and means especially adapted to send the resulting cryptogram (410) to said server (50) for storage,
a security token (10) including said token password (15), first dynamic password (6, 525) generator means and user interface means,
said server (50) including an operable server application; second dynamic password (65, 530) generator means; server secret generator means; and data storage means especially adapted to storage and retrieval of said cryptogram (410), said server secret (215) and a copy (35') of said application downloadable (35),
a second client (70) including means especially adapted to download and operatively install a copy (35') of said application downloadable (35) from said server; means especially adapted to retrieve said cryptogram (410); means especially adapted to decrypt said cryptogram (410) using a second symmetric key (710) derived from said token password (15) supplied from said security token (10), said server secret (215) supplied by said server (50) and said symmetric algorithm; and means especially adapted to operatively store said cryptographic secret (25) on said second client (70),
wherein said first and said second network enabled clients (20, 70) are connected to said server (50) through a network.

2. The system according to claim 1 wherein said security token (10) combines the most recent first dynamic password (6, 525) with said token password (15) using a bitwise operation forming an obfuscated token password (210).

3. The system according to claim 2 wherein said obfuscated token password (210) is entered into said first and second network enabled clients (20, 70).

4. The system according to claim 3 wherein said server application combines the most recent second dynamic password (65, 530) with said obfuscated token password (210) using a bitwise operation.

5. The system according to claim 1 wherein said server secret (215) is a random number.

6. The system according to claim 1 wherein said cryptogram (410) is sent to said server (50), stored using said storage means and retrievable using a unique user identifier as a cross reference.

7. The system according to claim 1, wherein said decrypted cryptographic secret (25) and said first and second symmetric keys (310, 710) are temporarily stored in transient memory and destroyed after use.

8. The system according to claim 1 wherein said security token (10) further includes authentication means.

9. The system according to claim 8 wherein said security token (10) requires said user to enter a valid personal identifier before becoming operable.

10. The system according to claim 8 wherein said server (50) further includes authentication means.

11. The system according to claim 10 wherein said server (50) requires prior user authentication before allowing access.

12. The system according to claim 11 wherein said prior user authentication includes entry of a unique user identifier and said first dynamic password (6, 525).

13. The system according to claim 12 wherein said server (50) generates said second dynamic password (65, 530).

14. The system according to claim 13 wherein a match between said second dynamic password (65, 530) and said first dynamic password (6, 525) authenticate said user to said server (50).

15. A cryptographic method for facilitating remote storage and retrieval of a cryptographic secret (25) which can be encrypted via a server (50) from one or more network enabled clients (20, 70) comprising the following steps:
generating a token password (15) on a security token (10),
generating a server secret (215) on a server (50),
combining said token password (15) and said server secret (215) on a first network enabled client (20) forming a first symmetric key (310),
encrypting a cryptographic secret (25) installed on said first network enabled client (20) using said first symmetric key (310) and a symmetric algorithm forming a cryptogram (410),
sending said cryptogram (410) to said server (50),
storing said cryptogram (410) on said server (50),
retrieving said cryptogram (410) from said server (50) onto a second client (70),
retrieving said token password (15) supplied from said security token (10),
retrieving said server secret (215) supplied by said server (50),
combining said token password (15) and said server secret (215) forming a second symmetric key (710),
decrypting said cryptogram (410) using said second symmetric key (710) and said symmetric algorithm,
operatively installing said decrypted secret on said second client (70).

16. The method according to claim 15 further including the steps of:
combining said token password (15) with a most recent first dynamic password (6, 525), generating an obfuscated password (210),
generating a random number (202) on said first client (20),
combining said obfuscated password (210) and said random number (202), generating a first data blob (205),
sending said first data blob (205) to said server (50),
combining said first data blob (205) with a most recent second dynamic password (65, 530), forming a second data blob (210, 220),
sending said second data blob (210, 220) to said first client (20),
combining said second data blob (210, 220) with said random number (202), generating said first or said second symmetric key (310, 710).

17. The method according to claim 16, further including the steps of:
temporarily storing said most recent first dynamic password (6, 525) on said security token (10),
temporarily storing said most recent second dynamic password (65, 530) on said server (50),
and temporarily storing said random number (202) on said client.

18. The method according to claim 15 wherein a unique identifier is used to retrieve said cryptogram (410) and said server secret (215) from said server (50).

19. The method according to claim 15 further including the steps of:
authenticating a user to said security token (10) before generating said first dynamic password (6, 525),
authenticating said user to said server (50) before generating said second dynamic password (65, 530).

## Patentansprüche

1. Kryptographisches System zum Erleichtern des Fernspeicherns und -abrufens eines kryptographischen Geheimnisses (25), das über einen Server (50) von einem oder mehreren Kundengeräten in einem Netzwerk verschlüsselt werden kann, das Folgendes umfasst:
ein erstes Kundengerät (20) in einem Netzwerk, das eine betriebsbereite Anwendung (35), die herunterladbar ist, das krytographische Geheimnis (25); Mittel, das besonders angepasst ist, um das kryptographische Geheimnis (25) unter Verwendung eines ersten symmetrischen Schlüssels (310) zu verschlüsseln, der von einem Tokenpasswort (15), Servergeheimnis (215) und einem symmetrischen Algorithmus abgeleitet wird; und Mittel umfasst, das besonders angepasst ist, um das resultierende Kryptogramm (410) zum Speichern an den Server (50) zu senden,
ein Sicherheitstoken (10), das das Tokenpasswort (15), erste dynamische Passwort- (6, 525) Generatormittel und Benutzerschnittstellenmittel umfasst,
wobei der Server (50) eine betriebsbereite Serveranwendung; zweite dynamische Passwort- (65, 530) Generatormittel; Servergeheimnis-Generatormittel; und Datenspeichermittel umfasst, das besonders zum Speichern und Abrufen des Kryptogramms (410) angepasst ist, des Servergeheimnisses (215) und einer Kopie (35') der Anwendung, die herunterladbar ist, angepasst ist,
ein zweites Kundengerät (70), das Mittel umfasst, das besonders angepasst ist, um eine Kopie (35') der Anwendung (35), die vom Server herunterladbar ist, herunterzuladen und betriebsbereit zu installieren; Mittel, das besonders angepasst ist, um das Kryptogramm (410) abzurufen; Mittel, das besonders angepasst ist, um das Kryptogramm (410) unter Verwendung eines zweiten symmetrischen Schlüssels (710) zu entschlüsseln, der von dem Tokenpasswort (15), das von dem Sicherheitstoken (10) bereitgestellt wird, das Servergeheimnis (215), das durch den Server (50) bereitgestellt wird, und das symmetrischen Algorithmus abgeleitet wird; und Mittel umfasst, das besonders angepasst ist, um das kryptographischen Geheimnis (25) auf dem zweiten Kundengerät (70) betriebsbereit zu speichern,
wobei die ersten und zweiten Kundengeräte in einem Netzwerk (20, 70) mit dem Server (50) durch ein Netzwerk verbunden sind.

2. System nach Anspruch 1, wobei das Sicherheitstoken (10) das neueste erste dynamische Passwort (6, 525) mit dem Tokenpasswort (15) unter Verwendung einer bitweisen Operation kombiniert, wobei ein obfuskiertes Tokenpasswort (210) gebildet wird.

3. System nach Anspruch 2, wobei das obfuskierte Tokenpasswort (210) in die ersten und zweiten Kundengeräte in einem Netzwerk (20, 70) eingegeben wird.

4. System nach Anspruch 3, wobei die Serveranwendung das neueste zweite dynamische Passwort (65, 530) unter Verwendung einer bitweisen Operation mit dem obfuskierten Tokenpasswort (210) kombiniert.

5. System nach Anspruch 1, wobei das Servergeheimnis (215) eine Zufallszahl ist.

6. System nach Anspruch 1, wobei das Kryptogramm (410) an den Server (50) gesendet wird, unter Verwendung des Speichermittels gespeichert wird, und unter Verwendung einer eindeutigen Benutzerkennung als Querverweis abgerufen werden kann.

7. System nach Anspruch 1, wobei das entschlüsselte kryptographische Geheimnis (25) und die ersten und zweiten symmetrischen Schlüssel (310, 710) zeitweise im Transientenspeicher gespeichert und nach der Verwendung zerstört werden.

8. System nach Anspruch 1, wobei das Sicherheitstoken (10) ferner Authentifizierungsmittel umfasst.

9. System nach Anspruch 8, wobei das Sicherheitstoken (10) erfordert, dass der Benutzer eine gültige persönliche Kennung eingibt, bevor es bebetriebsbereit wird.

10. System nach Anspruch 8, wobei der Server (50) ferner Authentifizierungsmittel umfasst.

11. System nach Anspruch 10, wobei der Server (50) vor dem Ermöglichen des Zugriffs die vorherige Benutzerauthentifizierung erfordert.

12. System nach Anspruch 11, wobei die vorherige Benutzerauthentifizierung die Eingabe einer eindeutigen Benutzerkennung und des ersten dynamischen Passworts (6, 525) erfordert.

13. System nach Anspruch 12, wobei der Server (50) das zweite dynamische Passwort (65, 530) generiert.

14. System nach Anspruch 13, wobei eine Übereinstimmung zwischen dem zweiten dynamischen Passwort (65, 530) und dem ersten dynamischen Passwort (6, 525) den Benutzer dem Server (50) gegenüber authentifiziert.

15. Kryptographisches Verfahren zum Erleichtern des Fernspeicherns und -abrufens eines kryptographischen Geheimnisses (25), das über einen Server (50) von einem oder mehreren Kundengeräten (20, 70) in einem Netzwerk verschlüsselt werden kann, das die folgenden Schritte umfasst:
Generieren eines Tokenpassworts (15) auf einem Sicherheitstoken (10),
Generieren von einem Servergeheimnis (215) auf einem Server (50),
Kombinieren des Tokenpassworts (15) und des Servergeheimnisses (215) auf einem ersten Kundengerät (20) in einem Netzwerk zum Bilden eines ersten symmetrischen Schlüssels (310),
Verschlüsseln kryptographisches Geheimnisses (25), das auf dem ersten Kundengerät (20) in einem Netzwerk installiert ist, unter Verwendung des ersten symmetrischen Schlüssels (310) und eines symmetrischen Algorithmus' zum Bilden eines Kryptogramms (410),
Senden des Kryptogramms (410) an den Server (50),
Speichern des Kryptogramms (410) auf dem Server (50),
Abrufen des Kryptogramms (410) von dem Server (50) auf ein zweites Kundengerät (70),
Abrufen des Tokenpassworts (15), das von dem Sicherheitstoken (10) bereitgestellt wird,
Abrufen des Servergeheimnisses (215), das durch den Server (50) bereitgestellt wird,
Kombinieren des Tokenpassworts (15) und des Servergeheimnisses (215) zum Bilden eines zweiten symmetrischen Schlüssels (710),
Entschlüsseln des Kryptogramms (410) unter Verwendung des zweiten symmetrischen Schlüssels (710) und des symmetrischen Algorithmus',
betriebsbereites Installieren des entschlüsselten Geheimnisses auf dem zweiten Kundengerät (70).

16. Verfahren nach Anspruch 15, das ferner die folgenden Schritte umfasst:
Kombinieren des Tokenpassworts (15) mit einem neuesten ersten dynamischen Passwort (6, 525), wobei ein obfuskiertes Passwort (210) generiert wird,
Generieren einer Zufallszahl (202) auf dem ersten Kundengerät (20),
Kombinieren des obfuskierten Passworts (210) und der Zufallszahl (202), wobei ein erstes Datenblob (205) generiert wird,
Senden des ersten Datenblobs (205) an den Server (50),
Kombinieren des ersten Datenblobs (205) mit einem neuesten zweiten dynamischen Passwort (65, 530), wobei ein zweites Datenblob (210, 220) gebildet wird,
Senden des zweiten Datenblobs (210, 220) an das erste Kundengerät (20),
Kombinieren des zweiten Datenblobs (210, 220) mit der Zufallszahl (202), wobei der erste oder der zweite symmetrische Schlüssel (310, 710) generiert wird.

17. Verfahren nach Anspruch 16, das ferner die folgenden Schritte umfasst:
zeitweises Speichern des neuesten ersten dynamischen Passworts (6, 525) auf dem Sicherheitstoken (10),
zeitweises Speichern des neuesten zweiten dynamischen Passworts (65, 530) auf dem Server (50),
und zeitweises Speichern der Zufallszahl (202) auf dem Kundengerät.

18. Verfahren nach Anspruch 15, wobei eine eindeutige Kennung verwendet wird, um das Kryptogramm (410) und das Servergeheimnis (215) von dem Server (50) abzurufen.

19. Verfahren nach Anspruch 15, das ferner die folgenden Schritte umfasst:
Authentifizieren eines Benutzers gegenüber dem Sicherheitstoken (10) vor dem Generieren des ersten dynamischen Passworts (6, 525),
Authentifizieren des Benutzers gegenüber dem Server (50) vor dem Generieren des zweiten dynamischen Passworts (65, 530).

## Revendications

1. Système cryptographique destiné à faciliter une mémorisation et une récupération à distance d'un secret cryptographique (25) qui peut être crypté par l'intermédiaire d'un serveur (50) à partir d'un ou plusieurs clients compatibles avec un réseau comprenant :
un premier client compatible avec un réseau (20) comprenant une application pouvant être mise en oeuvre et téléchargeable (35), ledit secret cryptographique (25), un moyen spécialement conçu pour crypter ledit secret cryptographique (25) en utilisant une première clé symétrique (310) obtenue à partir d'un mot de passe de jeton (15), un secret de serveur (215) et un algorithme symétrique, et un moyen spécialement conçu pour envoyer le cryptogramme résultant (410) audit serveur (50) pour mémorisation,
un jeton de sécurité (10) comprenant ledit mot de passe de jeton (15), un moyen de générateur de premier mot de passe dynamique (6, 525) et un moyen d'interface d'utilisateur,
ledit serveur (50) comprenant une application de serveur pouvant être mise en oeuvre, un moyen de générateur de second mot de passe dynamique (65, 530), un moyen de générateur de secret de serveur et un moyen de mémorisation de données spécialement conçu pour la mémorisation et la récupération dudit cryptogramme (410), dudit secret de serveur (215) et d'une copie (35') de ladite application téléchargeable (35),
un second client (70) comprenant un moyen spécialement conçu pour télécharger et installer de manière fonctionnelle une copie (35') de ladite application téléchargeable (35) à partir dudit serveur, un moyen spécialement conçu pour récupérer ledit cryptogramme (410), un moyen spécialement conçu pour décrypter ledit cryptogramme (410) en utilisant une seconde clé symétrique (710) obtenue à partir dudit mot de passe de jeton (15) fourni à partir dudit jeton de sécurité (10), ledit secret de serveur (215) fourni par ledit serveur (50) et ledit algorithme symétrique, et un moyen spécialement conçu pour mémoriser de manière fonctionnelle ledit secret cryptographique (25) sur ledit second client (70),
dans lequel ledit premier et ledit second clients compatibles avec un réseau (20, 70) sont connectés audit serveur (50) par l'intermédiaire d'un réseau.

2. Système selon la revendication 1, dans lequel ledit jeton de sécurité (10) combine le premier mot de passe dynamique le plus récent (6, 525) avec ledit mot de passe de jeton (15) en utilisant une opération au niveau du bit formant un mot de passe de jeton embrouillé (210).

3. Système selon la revendication 2, dans lequel ledit mot de passe de jeton embrouillé (210) est entré dans lesdits premier et second clients (20, 70) compatibles avec un réseau.

4. Système selon la revendication 3, dans lequel ladite application de serveur combine le second mot de passe dynamique le plus récent (65, 530) audit mot de passe de jeton embrouillé (210) en utilisant une opération au niveau du bit.

5. Système selon la revendication 1, dans lequel ledit secret de serveur (215) est un nombre aléatoire.

6. Système selon la revendication 1, dans lequel ledit cryptogramme (410) est envoyé audit serveur (50), mémorisé en utilisant ledit moyen de mémorisation et peut être récupéré en utilisant un identificateur d'utilisateur unique en tant que référence croisée.

7. Système selon la revendication 1, dans lequel ledit secret cryptographique décrypté (25) et lesdites première et seconde clés symétriques (310, 710) sont temporairement mémorisés dans une mémoire transitoire et détruits après utilisation.

8. Système selon la revendication 1, dans lequel ledit jeton de sécurité (10) comprend en outre un moyen d'authentification.

9. Système selon la revendication 8, dans lequel ledit jeton de sécurité (10) nécessite que ledit utilisateur entre un identificateur personnel valide avant de pouvoir être mis en oeuvre.

10. Système selon la revendication 8, dans lequel ledit serveur (50) comprend en outre un moyen d'authentification.

11. Système selon la revendication 10, dans lequel ledit serveur (50) requiert une authentification d'utilisateur préalable avant de permettre l'accès.

12. Système selon la revendication 11, dans lequel ladite authentification d'utilisateur préalable comprend l'entrée d'un identificateur d'utilisateur unique et ledit premier mot de passe dynamique (6, 525).

13. Système selon la revendication 12, dans lequel ledit serveur (50) génère ledit second mot de passe dynamique (65, 530).

14. Système selon la revendication 13, dans lequel une correspondance entre ledit second mot de passe dynamique (65, 530) et ledit premier mot de passe dynamique (6, 525) authentifie ledit utilisateur pour ledit serveur (50).

15. Procédé cryptographique destiné à faciliter une mémorisation et une récupération à distance d'un secret cryptographique (25) qui peut être crypté par l'intermédiaire d'un serveur (50) à partir d'un ou plusieurs clients compatibles avec un réseau (20, 70) comprenant les étapes suivantes :
générer un mot de passe de jeton (15) sur un jeton de sécurité (10),
générer un secret de serveur (215) sur un serveur (50),
combiner ledit mot de passe de jeton (15) et ledit secret de serveur (215) sur un premier client compatible avec un réseau (20) en formant une première clé symétrique (310),
crypter un secret cryptographique (25) installé sur ledit premier client (20) compatible avec un réseau en utilisant ladite première clé symétrique (310) et un algorithme symétrique formant un cryptogramme (410),
envoyer ledit cryptogramme (410) audit serveur (50),
mémoriser ledit cryptogramme (410) sur ledit serveur (50),
récupérer ledit cryptogramme (410) à partir dudit serveur (50) sur un second client (70),
récupérer ledit mot de passe de jeton (15) fourni à partir dudit jeton de sécurité (10),
récupérer ledit secret de serveur (215) fourni par ledit serveur (50),
combiner ledit mot de passe de jeton (15) et ledit secret de serveur (215) en formant une seconde clé symétrique (710),
décrypter ledit cryptogramme (410) en utilisant ladite seconde clé symétrique (710) et ledit algorithme symétrique,
installer de manière fonctionnelle ledit secret décrypté sur ledit second client (70).

16. Procédé selon la revendication 15, comprenant en outre les étapes consistant à :
combiner ledit mot de passe de jeton (15) à un premier mot de passe dynamique le plus récent (6, 525), en générant un mot de passe embrouillé (210),
générer un nombre aléatoire (202) sur ledit premier client (20),
combiner ledit mot de passe embrouillé (210) et ledit nombre aléatoire (202), en générant un premier élément "blob" de données (205),
envoyer ledit premier élément "blob" de données (205) audit serveur (50),
combiner ledit premier élément "blob" de données (205) avec un second mot de passe dynamique le plus récent (65, 530), en formant un second élément "blob" de données (210, 220),
envoyer ledit second élément "blob" de données (210, 220) audit premier client (20),
combiner ledit second élément "blob" de données (210, 220) audit nombre aléatoire (202), en générant ladite première ou ladite seconde clé symétrique (310, 710).

17. Procédé selon la revendication 16, comprenant en outre les étapes consistant à :
mémoriser temporairement ledit premier mot de passe dynamique le plus récent (6, 525) sur ledit jeton de sécurité (10),
mémoriser temporairement ledit second mot de passe dynamique le plus récent (65, 530) sur ledit serveur (50),
et mémoriser temporairement ledit nombre aléatoire (202) sur ledit client.

18. Procédé selon la revendication 15, dans lequel un identificateur unique est utilisé pour récupérer ledit cryptogramme (410) et ledit secret de serveur (215) à partir dudit serveur (50).

19. Procédé selon la revendication 15, comprenant en outre les étapes consistant à :
authentifier un utilisateur pour ledit jeton de sécurité (10) avant de générer ledit premier mot de passe dynamique (6, 525),
authentifier ledit utilisateur pour ledit serveur (50) avant de générer ledit second mot de passe dynamique (65, 530).
